(19) Europäisches Patentamt

European Patent Office

Office européen des brevets

(11) EP 1 648 158 A1

(12) EUROPEAN PATENT APPLICATION

(43) Date of publication:
19.04.2006 Bulletin 2006/16

(51) Int Cl.:
*H04N 1/64* (2006.01)   *H04N 1/60* (2006.01)
*H04N 9/11* (2006.01)   *G06T 5/40* (2006.01)

(21) Application number: 04292464.7

(22) Date of filing: 18.10.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(71) Applicant: Thomson Licensing
92100 Boulogne-Billancourt (FR)

(72) Inventors:
• Stauder, Jürgen,
c/o Thomson
92648 Boulogne Cedex (FR)

• Chupeau, Bertrand
92648 Boulogne Cedex (FR)
• Oisel, Lionel
92648 Boulogne Cedex (FR)

(74) Representative: Benezeth, Philippe J.L. M. et al
Thomson,
46, Quai Alphonse Le Gallo
92100 Boulogne Billancourt (FR)

(54) **Device and method for colour correction of an input image**

(57)    The invention concerns a device and a method for colour correction of an input image (11). According to the invention, the device comprises:

- means (2) for analysing the colours of an input image (11) in order to get a colours parametric representation (8) of said input image (11),
- means for selecting a set of reference images (10),
- means (1) for analysing the colours of at least one of said reference images or one region of said reference images in order to get a colours parametric representation (7) of said reference image (10),
- means for calculating a set of possible transformations (13) on the colour of said input image (11) such that the colours parametric representation (8) of said input image (11) is close to the colours parametric representation (7) of said reference image (10) according to a distance criterion,
- means for selecting among the said possible transformations (13), a subset of transformations (14),
- means (6) for interactively selecting visually one transformation (9) out of said subset.

Fig 1

EP 1 648 158 A1

**Description**

The invention concerns a method and a device for correcting colour of images using reference images.

In the age of introduction of digital film processing and digital cinema, multiple digital processing steps appear in the - classically analog - cinematographic workflow. While special effect generation and post-production are often already digital, now digital cameras and new digital display devices and digital media appear. This digital equipment changes completely the habits during capture and post-processing. Digital technologies bring new features but represent also a danger for artistic experience and heritage. It is thus necessary to transfer known artistic effects from conventional cinematographic post processing into digital cinema post processing. Since the introduction of digital cinema is long term, also technologies for co-existing analog and digital processes have to be studied. This may concern a film captured by an analog film camera and then display by a digital projector. This concerns also integration of digital special effects in an analog film production chain.

One of artistic workflows is colour correction. Colour correction is applied to raw film material after production to compensate for illumination colour artifacts. Colour correction is also applied before film distribution to fine-tune the colour tones in order to realize artistic intents for certain scenes. Colour correction is further applied to photographs, paintings or graphics before printing.

Colour correction can be applied for a sequence of video frames, for a single video frame, for still images or even for parts of an image, e.g. an object.

Usually colour correction is carried out in cooperation of artistic director and highly skilled operators. The artistic director describes the intent of colour correction while the operator has to transform the intent into a colour transform applied to the visual content. Results of colour correction thus depend on the experts who do it.

An efficiency problem of colour correction is that colour experts have to re-start work on each new image or video scene.

An evident solution for this problem is to choose for a first image an appropriate colour correction transform. This transform is stored and reused for other images.

This solution is not sufficient as the following example shows. Let us assume that the experts have already defined a colour transform for an image of a cloudy day scene such that an output image results that gives impression of a sunny late afternoon scene. For this purpose, the operator manually defined a transform adding notably more red tones. Lets assume further that now an image of a very sunny high noon scene should be transformed into a sunny late afternoon scene. Applying the same transform as for the cloudy day scene gives a result image with certainly too much red in it.

Another existing solution to automate and simplify colour correction of images is the following. An input image is to be transformed into an output image such that the colours of the output image are close to the colours of a reference image. This could be a daylight image to be transformed into a night image using another night reference image. Therefore R.C. Gonzales et al. propose in 1987 in their book entitled "Digital image processing" to calculate the colour histogram $H_I; H_R$ for the input image $I$ and for the reference image $R$, respectively. From the histograms $H_I; H_R$ two colour transforms $T_I^E; T_R^E$ are calculated such that the images $T_I^E I; T_R^E R$ have equalized histograms, i.e. all histogram values are, in ideal case, constant, where $T^E$ indicates a colour transform that equalizes histograms. A final colour transform $T_1 = T_1^{fixed} = T_R^{E-1} T_I^E$ is calculated and applied to the input image, where $T^{E-1}$ indicates the inverse of a colour transform that equalizes histograms. By this method, input images can be automatically colour corrected.

The presented solution has two disadvantages. First, it is based on the assumption that two images having the same or a close histogram show two scenes with the same or close illumination colour. Second, no fine-tuning method is proposed to correct eventual imperfections of the calculated transform.

A further existing solution to automize and simplify colour correction of images is the following. In 1990, a publication entitled "A novel algorithm for colour constancy" by D.A. Forsyth in the International Journal of Computer Vision No. 1 Volume 5, proposes to calculate a colour transform $T_1$, such that an input image $I$ having a convex colour gamut $M_I$ transformed into an output image $O = T_1 I$ with the convex colour gamut $M_O$ such that $M_O$ is included in the convex colour gamut $M_R$ of a reference image or a number of reference images. For this, the method uses diagonal transforms, for example $T_1 = \begin{pmatrix} c_R & 0 & 0 \\ 0 & c_G & 0 \\ 0 & 0 & c_B \end{pmatrix}$ for a three-dimensional colour space $R,G,B$. It is shown how to determine a specific gamut $M_T$ of transforms in the space of transforms having the coordinates $c_R, c_G, c_B$. The gamut

$M_T$ is determined such that it includes the totality of mathematical possible transforms for $T_1$ fulfilling the above explained constraint. The method then chooses either a transform $T_1 = T_1^{medium}$ being in the centre of the gamut $M_T$ or a transform $T_1 = T_1^{max}$ giving a gamut $M_O$ of maximal volume. A gamut $M_O$ of maximum volume is the gamut that contains as many colours as possible.

This solution has two disadvantages. First, it uses a heuristic method to chose a transform among the possible transforms and second, no fine tuning method is proposed to correct eventual imperfections of the calculated transform.

The present invention proposes to solve at least one of the above mentioned drawbacks.

According to the present invention, the colour correction applied to the input images is not fixed and independent from the input image and it lets the choice between several possible colour corrections.

To this end, the present invention concerns a device for colour correction of an input image comprising :

- means for analysing the colours of an input image in order to get a colour parametric representation of said input image,
- means for selecting a set of reference images,
- means for analysing the colours of at least one of said reference images or one region of said reference images in order to get a colour parametric representation of said reference image,
- means for calculating a set of possible transformations on the colour of said input image such that the colours parametric representation of said input image is close to the colours parametric representation of said reference image according to a distance criterion,
- means for selecting among the said possible transformations, a subset of transformations which applied to said input image, gives a physically possible colour corrected input image,
- means for interactively selecting visually one transformation out of said subset.

Thus, the invention can enable colour correction according to the input image and to the desired output aspect.

The selection of a subset can enable to get images showing physically possible scenes or also images which effect is desired by the user.

According to a preferred embodiment, the means for selecting the reference images select the images having a colour parametric representation containing a wide range of colours representing the possible colours for the desired aspect after colour correction.

According to a preferred embodiment, the means for selecting the reference images are controlled by a user in order to perform a manual selection of the reference images.

Indeed, the manual selection is interesting in order to get a more precise set of expected colours. The user can then input the desired colours he would like to get after transformation by selecting reference images containing such colours.

According to a preferred embodiment, the colour parametric representation is a colour gamut.

According to a preferred embodiment, the colour parametric representation is a colour histogram.

According to a preferred embodiment, a criterion of possible transformation is that the gamut of the input image is inside the gamut of the reference images after applying the transformation to the input image.

Such an embodiment makes sure that the colours of the transformed image are colours contained in the reference images and that the transformed image has the expected aspect as far as colours are concerned.

According to a preferred embodiment, the means for calculating a set of possible transforms calculate a single transform and calculate a set of possible transforms by calculating a transform gamut around this single transformation.

According to a preferred embodiment, the means for selecting a subset of possible transformations select said subset as being the transformations on a curve in the space of transformations between the neutral transform and the transform giving the largest gamut of the input image.

According to a preferred embodiment, the means for interactively selecting visually one transformation out of the subset comprise a graphical user interface.

The invention is also related to a method for colour correction of an input image comprising the steps of:

- analysing the colours of an input image in order to get a colour parametric representation of said input image,
- selecting a set of reference images,
- analysing the colours of at least one of said reference images or one region of said reference images in order to get a colour parametric representation of said reference image,
- calculating a set of possible transformations on the colour of said input image such that the colours parametric representation of said input image is close to the colours parametric representation of said reference image according to a distance criterion,
- selecting among the said possible transformations, a subset of transformations which applied to said input image, gives a physically possible colour corrected input image,

- interactively selecting visually one transformation out of said subset.

Other characteristics and advantages of the invention will appear through the description of a non-limiting embodiment of the invention, which will be illustrated, with the help of the enclosed drawings:

- figure 1 represents a bloc diagram of a preferred embodiment of the invention,
- figure 2 represents an enlarged colour gamut,
- figure 3 represents a gamut in the transformation space showing the subset of transforms selection,
- figure 4 represents another embodiment of the subset of transforms.

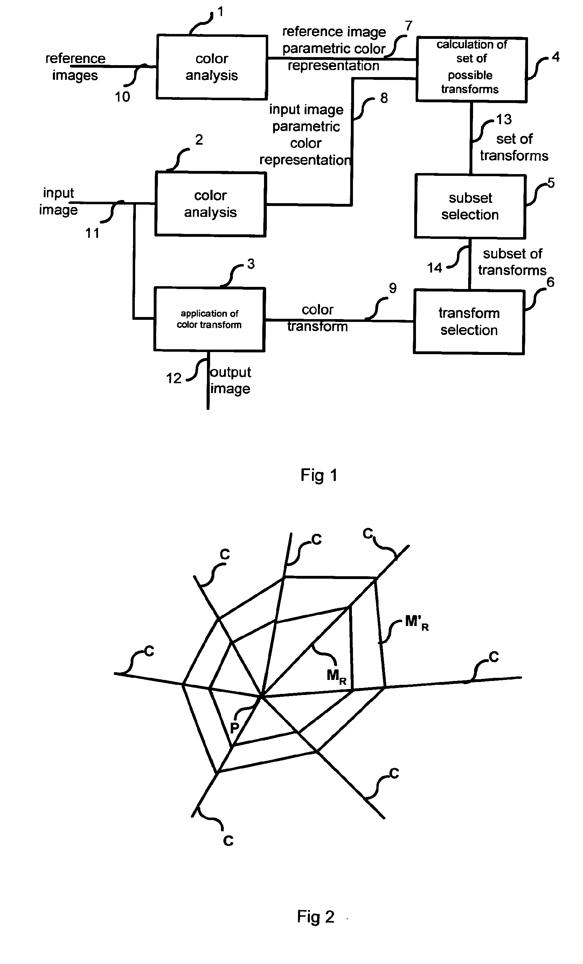

The represented modules on figure 1 are functional units, which can correspond to units physically separated or which can be included in a same physical unit. For instance, these modules or at least some of them can be grouped in a unique component or can constitute functionalities of a same software. In opposition, some modules can eventually be divided into separate units.

A set of references images, or regions in reference images, is selected by a user. In the following, this is called selected reference images. These reference images are for instance selected by skilled experts such as directors of photography. These reference images are images which colour looks like the desired colour. The set of selected reference images contain a wide range of colours representing the possible colours for the desired expected effect, for instance the colours that could represent a late evening atmosphere, skin colour or indoor colour. The input image to be colour-corrected will have after colour correction only those colours that are closely related to the selected colours.

The selection of the reference images is mainly done manually by the operator as colour correction is close to artistic creation. In other embodiments, it can be done automatically, the user giving for instance input parameters related to colour, illumination, time span of a film...

For instance, if the colour correction aims to obtain images having a night atmosphere, the reference images will also have a night atmosphere.

A colour analysis means 1 receives as input the reference images 10 from the user. It calculates and outputs a colour parametric representation 7 of all reference images 10. As colour parametric representation, a colour gamut $M_R$ can be chosen. The colour parametric representation describes all colours contained in the reference images 10.

In other embodiments of the invention, a colour histogram $H_R$ can also be chosen as colour parametric representation, or a selection of dominant colours or a vector quantization.

A colour analysis is also carried out on an input image 11 which has to be colour corrected. This is the function of module 2 which receives as input the input image 11.

The same analysis is done on the input image 11 as on the reference images 10. If a colour gamut-based analysis is carried out on reference images 10, a colour gamut-based analysis is also carried out on the input image 11.

The colour parametric representation represents the colours of all the reference images in a space such as XYZ as defined by the International Commission of Illumination (CIE) or CIE xy (chromaticity) spaces. The colour parametric representation can be based on a convex volume in colour space, called gamut, or on other volume representations such as colour histograms for instance. In other embodiments, other colour representations can be used. The term volume is used in a general sense and it corresponds to a three-dimensional volume in the case of a three-dimensional colour space.

The colour analysis module 2 outputs also a colour gamut 8 corresponding to the input image 11.

Based on these gamuts, a means 4 calculates a set 13 of possible colour transformations for the input image 11.

The possible transformations 13 are a set of transformations that each make the colour of the input image 11 close to the colour of the reference images 10 according to a distance criterion.

Each transformation consists of a mathematical function mapping an input colour to a transformed colour. The input colour and the transformed colour can be expressed for example in XYZ or xy coordinates. The transformation can consist for example of a linear mathematical function, a non-linear mathematical function or a look up table.

An example for a linear transform is the transform T according to

$$\begin{pmatrix} X' \\ Y' \\ Z' \end{pmatrix} = T \begin{pmatrix} X \\ Y \\ Z \end{pmatrix} \text{ with } T = \begin{pmatrix} c_R & 0 & 0 \\ 0 & c_G & 0 \\ 0 & 0 & c_B \end{pmatrix}$$

The parameters $c_R$, $c_G$, $c_B$ of all possible transforms 13 lie inside a gamut of transforms defined by a polygon P which is generated iteratively by the following steps:

1. Initialize P to a large RGB cube such that it encloses all colors,
2. Take the first point (R,G,B) of the polygon of the input image gamut,
3. For the N points $(R_n,G_n,B_n)$ of the polygon of the gamut of the reference images, calculate N transformations:

$$\left(c_{R,n} = R_n' / R \quad c_{G,n} = G_n' / G \quad c_{B,n} = B_n' / B\right), 0 \le n < N .$$

These N transformations build a temporal gamut $P_{tmp}$.
4. Calculate the intersection between P and $P_{tmp}$ and define P to be the result of this intersection.
5. Take the next point (R,G,B) of the polygon of the input image gamut and continue with step 2. If all points of the polygon of the input image gamut have already been processed, calculation of P is terminated.

The possible transformations 13 can be described by a gamut $M_T$ of transformations in the space of transforms. The space of transforms is the space of parameters defining a transform. For example, two transforms that are close in transform space have usually similar transformation characteristics.

When the colour gamut is used for characterizing the images, a criterion of possible transformation is that the gamut of the input image after applying the transformation is inside the gamut of the reference images up to a set of outliers. Outliers are transformed colours outside the gamut of the reference images. Outliers can be handled in different ways. For example their number can be limited to a certain percentage of the number of all transformed colours. Another possibility is to allow outliers up to a maximum distance from the gamut of the reference images. In other embodiments, other criterions can be used.

For reference images 10, showing not balanced scenes (such as close-ups, scenes with objects having all very close colours, scenes with low saturation), it may occur that no colour transform exists that fulfills the constraint which consists in having the gamut of the transformed input image in the gamut of the reference images. In this case, the gamut $M_R$ is enlarged resulting in an enlarged gamut $M'_R$, as shown on figure 2.

Figure 2 shows an example for the case of a two-dimensional space where gamuts are represented by polygons. A gamut can be represented by other means such as geometric primitives (cubes, spheres, ...) or curves (splines, mathematical functions, ...) The colour space can be for example defined by the xy chromaticity coordinates of the CIE. Since the xy coordinates are constrained to values between zero and one, the amplitude of enlargement can be calculated such that the volume of enlarged gamut $M'_R$ is in between the volume of $M_R$ and the maximum volume possible without passing the limits of the colour space. Such an operation can be parameterised by a parameter k, where k=0 represents no enlargement and k=1 represents the maximum enlargement. For enlargement, the centre P of gravity of $M_R$ is calculated. Then by putting straight lines c from the centre to points on the hull of the gamut, the points of the hull are moved outside of the gamut forming the hull of the enlarged gamut $M'_R$.

In another embodiment, there can be points that move stronger than other points. For example points far away from the limit of the colour space move stronger than other points.

In a further embodiment, when the colour analysis modules 1 and 2 produce colour histograms, a criterion for a possible transformation is related to the colour histograms.

In this embodiment

- a colour transform $T_I^E$ is applied to the input image 11 such that $T_I^E I$ has an equalized histogram, i.e. histogram values are either zero or constant,

- a colour transform $T_R^E$ is applied to the reference image 10 such that $T_R^E R$ has an equalized histogram,

- a single transform $T_1 = T_1^{fixed} = \left(T_R^E\right)^{-1} T_I^E$ is calculated.

E means a transformation that gives an equalized histogram.

Once this single transform T1 is obtained, in order to obtain a set of possible transforms 13, a cubic, spheric or ellipsoidal transform gamut is created around T1 in a space of transforms. The size of this gamut $M_T$ of transformations is set to relate to the distance between T1 and the neutral transform, which is the transform without effect to images. For example, when choosing a circular gamut, the radius is set to the distance between T1 and the neutral transform.

The gamut may be clipped when exceeding certain limits such as negative coefficients. Clipping means that concerned parts of the gamut are eliminated from the gamut. Other embodiments can be forecast.

The module 4 transmits to a module 5, the set of possible transforms 13 calculated as mentioned above.

The module 5 is in charge of selecting a subset of transforms 14 among the set of transforms 13.

The set of transforms 13 is described by a gamut $M_T$ of transforms in the preferred embodiment. All transforms included in the gamut $M_T$ transform the input image into an output image that fulfils the mathematic constraints.

One purpose of selecting a subset of transforms 14 among the possible transforms 13 is to get transforms which produce images showing physically possible scenes.

Indeed, some of the mathematically transforms in the set of transforms 13 may give too reddish, too greenish, too bluish or too dark output images that show non-realistic scenes.

This can occur when the scenes in the input image 11 and in the reference images 10 do not cover all colours, contain reflective objects or have fluorescent parts. In this case, the gamut $M_T$ is too large to give a plausible choice for a final transform.

The module 5 produces a subset of transforms by using the following physical and heuristic criteria :

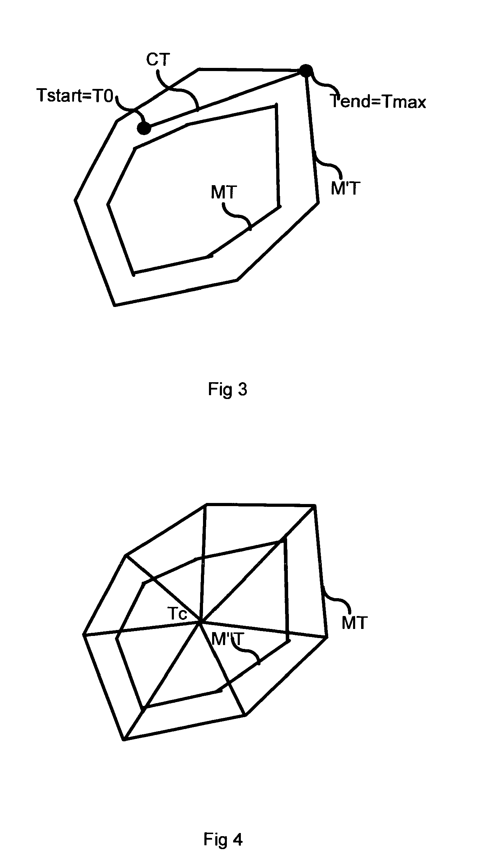

- the module 5 of subset selection produces as output a curve $C_T$ included in the gamut $M_T$ as shown on figure 3.

The curve is a straight line. Such a line can be defined for example between two transformations $T_{start}$, $T_{end}$ in the space of transformations inside the gamut $M_T$.

$T_{start}$ is chosen to be the neutral transform $T_o$.

If $T_o$ is not inside the gamut $M_T$, $M_T$ can be enlarged resulting in $M'_T$ and $M_T$ is replaced by $M'_T$ as shown on figure 3.

$T_{end}$ is chosen as being the transform giving the largest gamut $M_o$ of the output image transformed according to $O = T_{MAX}I$.

The curve $C_T$ can also be a closed curve in other embodiments and $T_{start}$ and $T_{end}$ can be chosen differently. For example, the curve can be defined to be a curve lying on the hull of the gamut $M_T$ starting at $T_{start}$ being the transform giving the smallest gamut $M_o$ and running to $T_{end}$ being the transform giving the largest gamut $M_o$.

In another embodiment of the invention, the subset of transforms 14 produced by subset selection module 5 is a gamut of transforms $M''_T$ which is smaller than $M_T$ as shown on figure 4.

This gamut of transforms $M''_T$ is generated by calculating the centre of gravity $T_C$ of $M_T$, setting lines through $T_C$ and points on the hull of $M_T$, then moving the points of the hull on the lines in inside direction, finally giving the hull of the smaller gamut $M''_T$.

The centre point $T_C$ can be set to the transform $T_o$ that is the neutral transform, defined by $T_0I = I$. The neutral transform is an important physical point in the gamut $M_T$ since it corresponds to the case where the input image keeps as it is. If $T_o$ is not included in the gamut, $T_C$ can be set to the centre of gravity.

The module 5 of subset selection produces the subset of transforms to a module 6 which chooses a single transform 9 out of the set of transforms.

This step is controlled by an operator The subset selection means 5 produce a reduced number of transforms, thus the selection by the user does not require a long time and does not require special skills from the operator.

The subset being represented in this embodiment by a curve CT in the space of transforms, the operator can choose a transform by sliding on the curve between its start and its ending point. An instantaneous calculation and display of the transformed input image allows the operators to choose the final transform $T \in C_T$ considering artistic aspects. For this interactive selection, the module 5 is linked to a module 3 which enables the instantaneous display of the transformed image. The module 6 can be a remote control having a graphical user interface (GUI) which enables the user to slide a cursor along the curve and to obtain as output the results of the transform applied to the input image on the module 3.

An output image 12 is output by module 3. This output image 12 corresponds to the input image to which the selected transformation 9 is applied.

**Claims**

1. Device for colour correction of an input image **characterized in that** it comprises :

   - means (2) for analysing the colours of an input image (11) in order to get a colour parametric representation (8) of said input image (11),
   - means for selecting a set of reference images (10),
   - means (1) for analysing the colours of at least one of said reference images or one region of said reference images in order to get a colour parametric representation (7) of said reference image (10),
- means for calculating a set of possible transformations (13) on the colour of said input image (11) such that the colour parametric representation (8) of said input image (11) is close to the colour parametric representation (7) of said reference image (10) according to a distance criterion,
- means for selecting among the said possible transformations (13), a subset of transformations (14) which applied to said input image (11), gives a physically possible colour corrected input image (11),
- means (6) for interactively selecting visually one transformation (9) out of said subset.

2. Device according to claim 1 **characterized in that** the means for selecting the reference images (10) select the images having a colour parametric representation containing a wide range of colours representing the possible colours for the desired aspect after colour correction.

3. Device according to claim 1 or 2 **characterized in that** the means for selecting the reference images (10) are controlled by a user in order to perform a manual selection of the reference images (10).

4. Device according to any of the preceding claims **characterized in that** the colour parametric representation (7, 8) is a colour gamut.

5. Device according to one of claims 1 to 3 **characterized in that** the colour parametric representation (7, 8) is a colour histogram.

6. Device according to claim 4 **characterized in that** a criterion of possible transformation is that the gamut of the input image (11) is inside the gamut of the reference images (10) after applying the transformation to the input image (11).

7. Device according to claim 5 **characterized in that** the means for calculating a set of possible transforms (13) calculate a single transform and calculate a set of possible transforms (13) by calculating a transform gamut around this single transformation.

8. Device according to claim 4 **characterized in that** the means for selecting a subset of possible transformations (14) select said subset as being the transformations on a curve ($C_T$) in the space of transformations between the neutral transform ($T_o$) and the transform ($T_{MAx}$) giving the largest gamut of the input image (11).

9. Device according to claim 8 **characterized in that** the means for interactively selecting visually one transformation (9) out of the subset of transformations (14) comprise a graphical user interface.

10. Method for colour correction of an input image **characterized in that** it comprises the steps of:

- analysing the colours of an input image (11) in order to get a colour parametric representation (8) of said input image (11),
- selecting a set of reference images (10),
- analysing the colours of at least one of said reference images (10) or one region of said reference images in order to get a colour parametric representation (8) of said reference image (10),
- calculating a set of possible transformations (13) on the colour of said input image such that the colours parametric representation of said input image is close to the colours parametric representation of said reference image (10) according to a distance criterion,
- selecting among the said possible transformations, a subset of transformations which applied to said input image, gives a physically possible colour corrected input image,
- interactively selecting visually one transformation out of said subset.

Fig 1

Fig 2

CT

Tstart=T0

Tend=Tmax

M'T

MT

Fig 3

Tc

M'T

MT

Fig 4

## EUROPEAN SEARCH REPORT

European Patent Office

Application Number

EP 04 29 2464

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 874 988 A (GU ET AL) 23 February 1999 (1999-02-23) * column 3, line 54 - line 59 * * column 9, line 49 - line 58 * * column 4, line 10 - line 21 * * column 14, line 59 - line 65 * * column 20, line 28 - line 38 * * column 21, line 7 - line 12 * | 1,5,10 | H04N1/64 H04N1/60 H04N9/11 G06T5/40 |
| A | US 2001/005427 A1 (TAKEMOTO FUMITO) 28 June 2001 (2001-06-28) * page 1, paragraphs 11,16,17 * * page 2, paragraphs 38,41 * * page 3, paragraph 47 * | 1-3,5,10 | |
| A | US 2001/028736 A1 (PETTIGREW DANIEL ET AL) 11 October 2001 (2001-10-11) * page 1, paragraph 8 * * page 2, paragraph 26 * * page 4, paragraph 52 * | 1,3,10 | |

TECHNICAL FIELDS SEARCHED (Int.Cl.7)

H04N
G06T

The present search report has been drawn up for all claims

| Place of search | Date of completion of the search | Examiner |
|---|---|---|
| The Hague | 11 March 2005 | Bouffier, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 04 29 2464

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2005

| Patent document cited in search report | | | Publication date | Patent family member(s) | | | Publication date |
|---|---|---|---|---|---|---|---|
| US 5874988 | A | | 23-02-1999 | NONE | | | |
| US 2001005427 | A1 | | 28-06-2001 | JP | 2001251531 | A | 14-09-2001 |
| | | | | CN | 1307317 | A | 08-08-2001 |
| | | | | EP | 1130898 | A2 | 05-09-2001 |
| US 2001028736 | A1 | | 11-10-2001 | GB | 2363020 | A | 05-12-2001 |
| | | | | US | 2004170317 | A1 | 02-09-2004 |
| | | | | US | 2005041854 | A1 | 24-02-2005 |

EPO FORM P0459

For more details about this annex : see Official Journal of the European Patent Office, No. 12/82